# EUROPEAN PATENT APPLICATION

(11) **EP 4 318 961 A1**
(43) Date of publication of application: **07.02.2024**
(21) Application number: 22774701.1
(22) Date of filing: 04.02.2022
(51) Int. Cl.: H04B 7/022, H04B 1/16, H04W 16/28, H04W 88/02

(54) **TERMINAL, BASE STATION, AND COMMUNICATION METHOD**

(30) Priority: 22.03.2021 JP 2021047413
(71) Applicant: NTT DOCOMO, INC., Tokyo 100-6150 (JP)
(72) Inventor: OKUYAMA, Tatsuki, Tokyo 100-6150 (JP); SUYAMA, Satoshi, Tokyo 100-6150 (JP); ASAI, Takahiro, Tokyo 100-6150 (JP)
(74) Representative: Hoffmann Eitle
(86) International application number: PCT/JP2022/004429
(87) International publication number: WO 2022/201900

(57) **Abstract**

This terminal includes: a reception unit that receives carrier waves from each of a plurality of base stations that transmit signals in coordination with each other; and a control unit that controls the reception frequency of each carrier wave on the basis of a reference signal included in each carrier wave, and that estimates a signal on the basis of the results of decoding carried out for each carrier wave.

## Description

### Technical Field

The present disclosure relates to a terminal, a base station, and a communication method.

### Background Art

Massive Multiple Input Multiple Output (MIMO) using multi-element antennae has become one of the main technologies for the 5th generation mobile communication system (5G). For example, in Massive MIMO, a sharp beam is generated by beamforming to achieve high-speed and high-capacity communication (e.g., see Patent Literature (hereinafter referred to as "PTL") 1). Additionally, in Massive MIMO, multiplex transmission of multiple users or multiple streams is used to achieve the high-speed and high-capacity communication.

Utilization of a millimeter wave band which enables a broader band has been studied in order to achieve the further high-speed and high-capacity communication in the future radio communication systems. For example, in the millimeter wave band, a communication area is narrow because a path loss is larger than that of sub-6 while a transmission distance is short, which may cause unstable communication between a base station and a moving terminal. Hence, a technology has been studied in which a plurality of base stations cooperates to perform communication with a terminal.

### Citation List

### Patent Literature

PTL 1
WO 2018/008212

### Summary of Invention

### Technical Problem

However, in radio communication in which the plurality of base stations cooperates, a frequency shift may occur in a carrier wave from each base station when the terminal moves. Therefore, in some cases, the terminal cannot appropriately receive a signal transmitted by the plurality of base stations in cooperation.

An aspect of the present disclosure is that a terminal appropriately receives a signal transmitted by a plurality of base stations in cooperation.

### Solution to Problem

A terminal according to an aspect of the present disclosure includes: a reception section that receives a carrier wave from each of a plurality of base stations that transmits a signal in cooperation; and a control section that controls a reception frequency of the carrier wave based on a reference signal included in the carrier wave, and estimates the signal based on a decoding result of decoding processing in the carrier wave.

A communication method according to an aspect of the present disclosure includes: receiving, by a terminal, a carrier wave from each of a plurality of base stations that transmits a signal in cooperation; controlling, by the terminal, a reception frequency of the carrier wave based on a reference signal included in the carrier wave; and estimating, by the terminal, the signal based on a decoding result of decoding processing in the carrier wave.

A base station according to an aspect of the present disclosure includes: a reception section that receives a carrier wave from each of a plurality of terminals; and a control section that controls a reception frequency of the carrier wave based on a reference signal included in the carrier wave, and estimates a signal transmitted by the plurality of terminals, based on a decoding result of decoding processing in the carrier wave.

A communication method according to an aspect of the present disclosure includes: receiving, by a base station, a carrier wave from each of a plurality of terminals; controlling, by the base station, a reception frequency of the carrier wave based on a reference signal included in the carrier wave; and estimating, by the base station, a signal transmitted by the plurality of terminals, based on a decoding result of decoding processing in the carrier wave.

### Advantageous Effects of Invention

According to the present disclosure, it is possible for a terminal to appropriately receive a signal transmitted by a plurality of base stations in cooperation.

### Brief Description of Drawings

FIG. 1 illustrates an exemplary configuration of a radio communication system according to an embodiment of the present disclosure;
FIG. 2 illustrates an example in which one frequency shift occurs;
FIG. 3 illustrates an example in which a plurality of frequency shifts occurs;
FIG. 4 illustrates an exemplary functional block of a terminal;
FIG. 5 illustrates an exemplary functional block of a base station;
FIG. 6 is a flowchart describing an exemplary operation of the terminal; and
FIG. 7 illustrates an exemplary hardware configuration of the terminal and the base station.

### Description of Embodiments

An embodiment of the present disclosure will be described below with reference to the accompanying drawings.

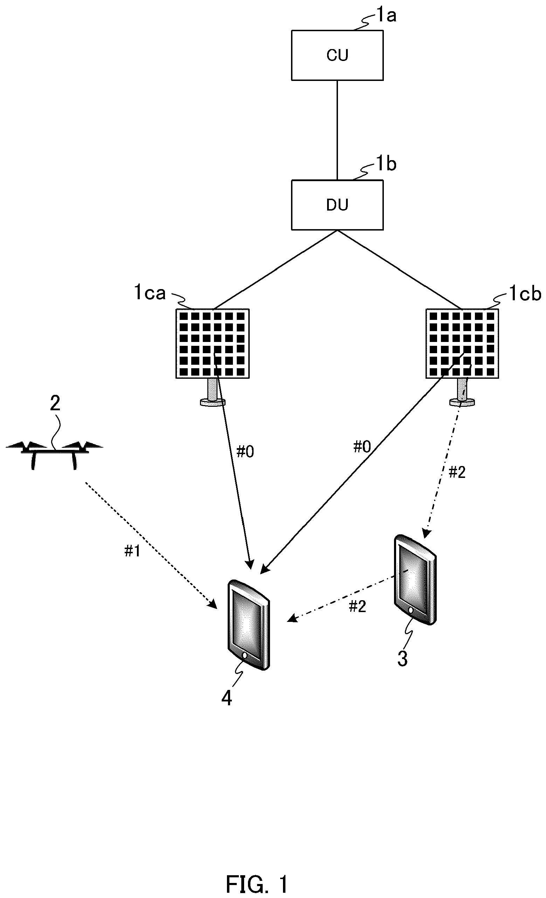

FIG. 1 illustrates an exemplary configuration of a radio communication system according to an embodiment of the present disclosure. As illustrated in FIG. 1, the radio communication system includes CU1a, DU1b, radio stations 1ca and 1cb, mobile base station 2, and terminals 3 and 4. Note that the term CU is an abbreviation for Centralized Unit. The term DU is an abbreviation for Distributed Unit.

CU1a includes, for example, an RRC layer, a SDAP layer, and a PDCP layer. The term RRC is an abbreviation for Radio Resource Control. The term SDAP is an abbreviation for Service Data Adaptation Protocol. The term PDCP is an abbreviation for Packet Data Convergence Protocol.

DU1b includes, for example, an RLC layer, a MAC layer, and a PHY-High layer. The term RLC is an abbreviation for Radio Link Control. The term MAC is an abbreviation for Medium Access Control. The term PHY is an abbreviation for the term physical.

Radio stations 1ca and 1cb each include, for example, a PHY-Low&RF layer. The term RF is an abbreviation for Radio Frequency.

CU1a is connected to a core network (not illustrated) and DU1b. CU1a processes a signal received from the core network, based on the above layer functions, and then transmits the signal to DU1b. CU1a also processes a signal received from DU1b, based on the above layer functions, and then transmits the signal to the core network.

DU1b is connected to CU1a and radio stations 1ca and 1cb. DU1b processes a signal received from CU1a, based on the above layer functions, and then transmits the signal to radio stations 1ca and 1cb. DU1b also processes signals received from radio stations 1ca and 1cb, based on the above layer functions, and then transmits the signals to CU1a.

Radio stations 1ca and 1cb are each connected to DU1b. Additionally, radio stations 1ca and 1cb use a millimeter wave band to perform radio communication with terminals 3 and 4. Radio stations 1ca and 1cb process a signal received from DU1b, based on the above layer functions, and then transmit the signal to terminals 3 and 4. Radio stations 1ca and 1cb also process signals received from terminals 3 and 4, based on the above layer functions, and then transmit the signals to DU1a.

Incidentally, the configurations of CU1a, DU1b, and radio stations 1ca and 1cb are not limited to the examples in FIG. 1. For example, to DU1b, one radio station may be connected, or three or more radio stations may be connected.

Further, one DU may be connected to each of radio stations 1ca and 1cb. A DU connected to radio station 1ca and a DU connected to radio station 1cb may be connected to CU1a.

Radio stations 1ca and 1cb may be cascade-connected. By way of example, radio station 1ca may be connected to DU1b while radio station 1cb may be connected to radio station 1ca.

Meanwhile, each of CU1a and DU1b may be referred to as a base station, gNB, a fixed base station, or aground station. Further, each of CU1a, DU1b, and radio stations 1ca and 1cb may be referred to as a base station, a fixed base station, or a ground station. The radio station may be referred to as a Radio Unit (RU), an extension station, a transmission point, or an antenna panel. In the following, each of CU1a, DU1b, and radio stations 1ca and 1cb is sometimes referred to as fixed base station 1.

Mobile base station 2 is, for example, a moving base station such as a drone or a High Altitude Platform Station (HAPS). Mobile base station 2 need not be one that moves in the air and may be, for example, a vehicle that travels on the ground, such as an automobile or a train. Mobile base station 2 uses the millimeter wave band to perform radio communication with terminal 4.

Terminal 3 is a terminal that relays communication between fixed base station 1 and terminal 4. The communication between terminal 4 and fixed base station 1 via terminal 3 may be referred to as inter-terminal cooperative communication or sidelink communication. Terminal 3 uses the millimeter wave band to perform radio communication with terminal 4. Note that terminal 3 is regarded as a base station, a mobile base station, or a relay station, when viewed from terminal 4.

Fixed base station 1, mobile base station 2, and terminal 3 communicate with terminal 4 in cooperation. For example, as illustrated in FIG. 1, fixed base station 1 communicates with terminal 4 using stream #0. Mobile base station 2 communicates with terminal 4 using stream #1. Terminal 3 communicates with terminal 4 using stream #2.

Cooperative communication based on a plurality of base stations includes, for example, coordinated transmission for transmitting the same signals to terminal 4, distributed MIMO for transmitting different signals to terminal 4, and communication switching for switching a base station that transmits a signal. The coordinated transmission may be referred to as simultaneous transmission, coordinated MIMO, or joint transmission. The distributed MIMO may be referred to as distributed transmission or distributed sending.

When terminal 4 moves, a frequency shift may occur in a carrier wave received by terminal 4. For example, a Doppler frequency shift may occur in the received carrier wave of terminal 4.

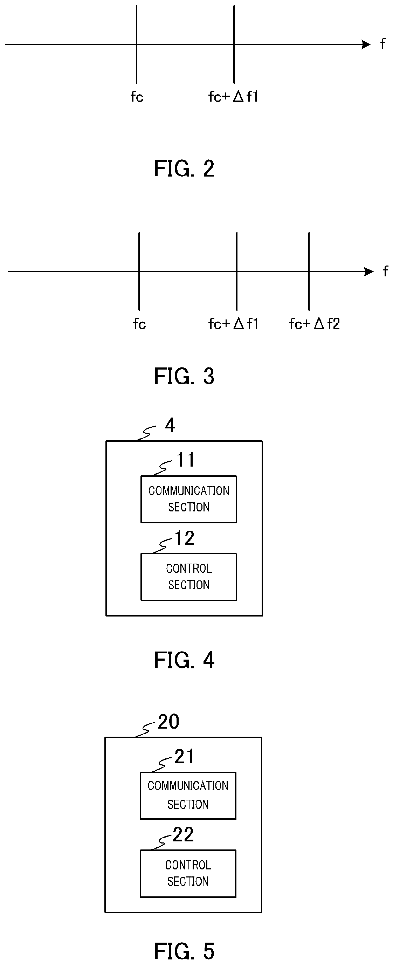

FIG. 2 illustrates an example in which one frequency shift occurs. In the illustration of FIG. 2, it is assumed that fixed base station 1 outputs a carrier wave while mobile base station 2 and terminal 3 do not output carrier waves.

The sign "fc" illustrated in FIG. 2 indicates a frequency (center frequency) of the carrier wave from fixed base station 1. The sign "fc+Δf1" illustrated in FIG. 2 indicates a frequency (reception frequency) of the carrier wave received by terminal 4.

The carrier wave from fixed base station 1 may be shifted in frequency when being received by terminal 4. For example, movement of terminal 4 may cause a frequency shift in the reception frequency of the carrier wave in terminal 4, and thus, a shift from "fc" to "fc+Δf1" may occur as illustrated in FIG. 2.

A signal received by terminal 4 may include an error on the basis of the shift in the reception frequency of the carrier wave. Therefore, terminal 4 uses Automatic Frequency Control (AFC) to compensate for (correct) the reception frequency of the carrier wave.

For example, the AFC calculates, based on a reference signal transmitted from fixed base station 1, phase rotation of the reference signal. The AFC calculates, based on the calculated phase rotation, a shift "Δf1" in a reception frequency of a carrier wave. The AFC adjusts, based on the calculated "Δf1," the reception frequency of the carrier wave to "fc+Δf1," and then receives the carrier wave. For the reference signal, DeModulation Reference Signals (DMRS) may be used, for example.

Incidentally, the above has assumed that mobile base station 2 and terminal 3 do not output carrier waves, but they may output the carrier waves. Even in a situation where fixed base station 1, mobile base station 2, and terminal 3 output carrier waves, one carrier wave shift (Δf1) occurs as illustrated in FIG. 2, when shifts in the carrier waves from fixed base station 1, mobile base station 2, and terminal 3 are identical with one another. In this case as well, terminal 4 uses the AFC to compensate for the reception frequencies of the carrier waves.

FIG. 3 illustrates an example in which a plurality of frequency shifts occurs. In the illustration of FIG. 3, it is assumed that fixed base station 1 and mobile base station 2 output carrier waves while terminal 3 outputs no carrier wave.

The sign "fc" illustrated in FIG. 3 indicates a frequency of the carrier waves of fixed base station 1 and mobile base station 2. The sign "fc+Δf1" illustrated in FIG. 3 indicates a reception frequency, which is received by terminal 4, of the carrier wave from fixed base station 1. The sign "fc+Δf2" illustrated in FIG. 3 indicates a reception frequency, which is received by terminal 4, of the carrier wave from mobile base station 2.

The carrier waves of fixed base station 1 and mobile base station 2 may be shifted in frequency when being received by terminal 4. For example, movement of terminal 4 may cause a frequency shift in the reception frequencies of the carrier waves in terminal 4, and thus, shifts from "fc" to "fc+Δf1" and "fc+Af2" may occur as illustrated in FIG. 3.

In a case where Line Of Sight (LOS) communication is performed and there is no reflected wave, for example, carrier wave shifts occur as many as the number of base stations with which terminal 4 communicates.

For example, when fixed base station 1 and mobile base station 2 transmit carrier waves, up to two reception-frequency shifts occur in terminal 4, as illustrated in FIG. 3. Meanwhile, for example, when three base stations of fixed base station 1, mobile base station 2, and terminal 3 transmit carrier waves, up to three reception-frequency shifts occur in terminal 4.

That is, in communication based on base station-cooperation, a plurality of frequency shifts occurs because carrier waves arrive at terminal 4 from a plurality of base stations (various directions). Hence, it is important to compensate for a reception frequencies of carrier waves, based on the plurality of frequency shifts that is caused by movement of terminal 4. In particular, a large frequency shift may occur when the radio communication system includes mobile base station 2 and moving terminal 3, and thus, the compensation for the reception frequencies of the carrier waves becomes important. It is also important to estimate a transmission signal after the compensation for the reception frequencies of the carrier waves.

<Compensation Processing for Frequency Shift and Estimation Processing of Transmission Signal>

Terminal 4 compensates for a plurality of frequency shifts of carrier waves based on base station-cooperation, by using the processing listed in 1 to 3 below. Terminal 4 then estimates transmission signals to be transmitted by the base stations through the base station-cooperation.

### 1. Reception processing for adjusting of reception frequencies of carrier waves according to any of a plurality of frequency shift positions

For example, in the example of FIG. 3, the AFC of terminal 4 adjusts the reception frequencies of the carrier waves to "fc+Δf1" among frequency shift positions of "fc+Δf1" and "fc+Af2." After adjusting the reception frequencies of the carrier waves to "fc+Δf1," terminal 4 performs reception processing of transmission signals transmitted by fixed base station 1 and mobile base station 2. For example, terminal 4 performs demodulation and decoding processing on the transmission signals transmitted by fixed base station 1 and mobile base station 2.

### 2. Reception processing for adjusting of reception frequencies of carrier waves according to frequency shift position different from that in above 1

For example, in the example of FIG. 3, the AFC of terminal 4 adjusts the reception frequencies of the carrier waves to "fc+Δf2" that is different from "fc+Δf1" in above 1, among frequency shift positions of "fc+Δf1" and "fc+Δf2." After adjusting the reception frequencies of the carrier waves to "fc+Δf2," terminal 4 performs reception processing of transmission signals transmitted by fixed base station 1 and mobile base station 2. For example, terminal 4 performs demodulation and decoding processing on the transmission signals transmitted by fixed base station 1 and mobile base station 2.

### 3. Estimation of transmission signals using reception processing results of above 1 and 2

Terminal 4 uses (combines) the reception processing results (demodulated and decoded signals) of above 1 and 2 to estimate transmission signals included in the carrier waves transmitted by fixed base station 1 and mobile base station 2. For example, terminal 4 estimates transmission signals transmitted by fixed base station 1 and mobile base station 2 through the coordinated transmission or the distributed MIMO, based on maxima-ratio combining of a soft value of the reception processing result acquired in above 1 and a soft value of the reception processing result acquired in above 2. Alternatively, terminal 4 estimates transmission signals transmitted by fixed base station 1 and mobile base station 2 through the coordinated transmission or the distributed MIMO, based on majority-decision of a hard value of the reception processing result acquired in above 1 and a hard value of the reception processing result acquired in above 2.

That is, terminal 4 uses the AFC to compensate for the reception frequencies of the carrier waves, in each of the plurality of frequency shifts. In the respective compensated reception frequencies of the carrier waves, terminal 4 performs reception processing of transmission signals transmitted in cooperation by fixed base station 1 and mobile base station 2. Terminal 4 thus estimates the transmission signals transmitted by fixed base station 1 and mobile base station 2, by using reception processing results in the respective compensated reception frequencies of the carrier waves.

Incidentally, the AFC has been used in the compensation processing for a frequency shift of a received carrier wave, but the present disclosure is not limited to this. Other processing may be used in the compensation processing for a frequency shift.

Further, the number of times of reception processing in the different frequency shift positions is not limited to twice as in the examples of above 1 and 2. Terminal 4 repeats the processing of above 1 and 2 depending on the number of frequency shifts.

In one example, suppose that three base stations transmit carrier waves and three frequency shifts of "Δf1, Δf2, and Δf3" occur in terminal 4. In this case, terminal 4 compensates for the reception frequencies of the carrier waves at Δf1 (compensates for reception frequencies to fc+Δf1) and performs the reception processing. Next, terminal compensates for the reception frequencies of carrier waves at Δf2 that is different from Δf1 (compensates for reception frequencies to fc+Δf2) and performs the reception processing. Then, terminal compensates for the reception frequencies of carrier waves at Δf3 that is different from Δf1 and Δf2 (compensates for reception frequencies to fc+Δf3) and performs the reception processing. Terminal 4 thus estimates transmission signals transmitted by the three base stations, by using reception processing results.

Further, terminal 4 may use the reception processing result acquired in the reception processing of above 1 for the reception processing of above 2. For example, terminal 4 may use the reception processing result acquired in the reception processing of above 1 for interference cancellation in the reception processing of above 2. That is, terminal 4 may use a reception processing result acquired in certain reception processing for other reception processing.

Further, the reception processing of above 1 and 2 may be executed by one circuit. For example, the one circuit may execute the reception processing of above 1 and then perform the reception processing of above 2.

Further, the reception processing of above 1 and 2 may be executed by two circuits. For example, a first circuit may execute the reception processing of above 1, and a second circuit may execute the reception processing of above 1. The reception processing in the first circuit and the reception processing in the second circuit may overlap each other in processing timing. Further, the first circuit may be composed of a plurality of circuits. The second circuit may also be composed of a plurality of circuits.

Further, in the above, the reception processing in the downlink direction has been described, but the processing of above 1 to 3 may be applied to the reception processing in the uplink direction. For example, each of fixed base station 1, mobile base station 2, and terminal 3 may execute the processing of above 1 to 3 on signals transmitted from a plurality of terminals.

In the case of uplink direction, fixed base station 1 may divide antenna element groups of radio stations 1ca and 1cb into a plurality of blocks, and then execute, in each block, the reception processing of above 1 and the reception processing of above 2. The reception processing for each block may be executed by one circuit. For example, an antenna element group of 128 elements included in radio station 1ca is divided into a first block of 64 elements and a second block of 64 elements. Reception processing in the first block is executed by the first circuit, and reception processing in the second block may be executed by the second circuit.

### <Compensation Processing for Frequency Shift using Location Information>

Terminal 4 may compensate for a frequency shift of a carrier wave transmitted by each of base stations, by using location information on each of fixed base station 1, mobile base station 2, and terminal 3, which perform the base station-cooperation, and location information on terminal 4. After performing the compensation processing for the frequency shifts of the carrier waves using the location information, terminal 4 may perform the reception processing of above 1 and 2.

By way of example, terminal 4 calculates a relative angle between fixed base station 1 and terminal 4 based on the location information on fixed base station 1 and the location information on terminal 4. Terminal 4 calculates (estimates), based on the calculated relative angle, a frequency shift (amount) of the carrier wave transmitted by fixed base station 1. Terminal 4 compensates for the reception frequency of the carrier wave from fixed base station 1, based on the calculated frequency shift. Terminal 4 executes (from position of compensated reception frequency of carrier wave) the AFC in above 1, by using the compensated reception frequency of the carrier wave. Thus, terminal 4 can shorten a processing time for above 1 (processing time for AFC).

Further, for example, terminal 4 calculates a relative angle between mobile base station 2 and terminal 4 based on the location information on mobile base station 2 and the location information on terminal 4. Terminal 4 calculates (estimates), based on the calculated relative angle, a frequency shift of the carrier wave transmitted by mobile base station 2. Terminal 4 compensates for the reception frequency of the carrier wave from mobile base station 2, based on the calculated frequency shift. Terminal 4 executes (from position of compensated reception frequency of carrier wave) the AFC in above 2 by using the compensated reception frequency of the carrier wave. Thus, terminal 4 can shorten a processing time for above 2 (processing time for AFC).

Incidentally, for example, fixed base station 1 transmits, to terminal 4, the location information previously set for fixed base station 1. Mobile base station 2 has, for example, a location-acquisition function such as GPS and transmits, to terminal 4, the location information on mobile base station 2. Terminal 4 has, for example, a location-acquisition function such as GPS and acquires the location information on terminal 4. Terminal 4 calculates a relative angle between terminal 4 and fixed base station 1 by using the location information transmitted from fixed base station 1 and the location information on terminal 4 acquired with the location-acquisition function of terminal 4. Terminal 4 calculates also a relative angle between terminal 4 and mobile base station 2 by using the location information transmitted from mobile base station 2 and the location information on terminal 4 acquired with the location-acquisition function of terminal 4.

In the above example, terminal 4 has compensated for frequency shifts for the two base stations of fixed base station 1 and mobile base station 2, based on the location information, but the present disclosure is not limited to this. In a case where the three base stations of fixed base station 1, mobile base station 2, and terminal 3 are in cooperation, terminal 4 also compensates for the frequency shift for terminal 3, based on location information transmitted from terminal 3 and the location information on terminal 4. Then, terminal 4 performs the AFC for the received carrier wave from terminal 3 by using the reception frequency of the carrier wave that has been compensated based on the location information, and performs reception processing of a transmission signal transmitted by terminal 3.

Alternatively, fixed base station 1 may calculate (estimate) a shift in a frequency shift (phase rotation (amount)) of a carrier wave to be received by terminal 4, and may apply the calculated phase rotation (amount) to a carrier wave to be transmitted to terminal 4.

In one example, fixed base station 1 receives location information from terminal 4. Fixed base station 1 calculates a phase rotation of a received carrier wave in terminal 4, by using location information on fixed base station 1 and the location information received from terminal 4. Fixed base station 1 applies the calculated phase rotation to a carrier wave to be transmitted to terminal 4 and then transmits the carrier wave to terminal 4. Thus, terminal 4 need not execute the compensation processing for a frequency shift based on the location information, thereby reducing overhead in the processing. Note that, in a similar manner, mobile base station 2 and terminal 3 apply phase rotation to carrier waves to be transmitted to terminal 4.

Further, in the above, the description has been given of the exemplary compensation processing for a frequency shift using the location information in the downlink direction, but the compensation processing for a frequency shift using the location information may be applied to the reception processing in the uplink direction. By way of example, for carrier waves transmitted from a plurality of terminals, each of fixed base station 1, mobile base station 2, and terminal 3 may compensate for frequencies of the received carrier waves, by using the location information. Then, each of fixed base station 1, mobile base station 2, and terminal 3 may execute the processing of above 1 to 3.

FIG. 4 illustrates an exemplary functional block of terminal 4. Terminal 4 includes communication section 11 and control section 12.

Communication section 11 receives a carrier wave from each of a plurality of base stations that transmits signals in cooperation.

Control section 12 controls a reception frequency of each carrier wave, based on a reference signal included in the carrier wave. By way of example, control section 12 uses the AFC to control the reception frequency of the carrier wave. Control section 12 then performs demodulation and decoding processing on each carrier wave and estimates, based on a processing result of the demodulation and decoding processing, signals transmitted by the plurality of base stations.

In addition, control section 12 calculates a frequency-shift amount for each carrier wave, based on location information on each of the plurality of base stations and location information on terminal 4. After controlling the reception frequency of each carrier wave based on the calculated frequency-shift amount, control section 12 controls the reception frequency of each carrier wave, based on the reference signal.

FIG. 5 illustrates an exemplary functional block of base station 20. In the following, when fixed base station 1, mobile base station 2, and terminal 3 are not distinguished, they are referred to as base station 20.

Communication section 21 receives a carrier wave from each of a plurality of terminals.

Control section 22 controls a reception frequency of each carrier wave, based on a reference signal included in the carrier wave. By way of example, control section 22 uses the AFC to control the reception frequency of the carrier wave. Control section 22 then performs demodulation and decoding processing on each carrier wave and estimates, based on a processing result of the demodulation and decoding processing, signals transmitted by the plurality of terminals.

In addition, control section 22 calculates a frequency-shift amount for each carrier wave, based on location information on each of the plurality of terminals and location information on base station 20. After controlling the reception frequency of each carrier wave based on the calculated frequency-shift amount, control section 22 controls the reception frequency of each carrier wave, based on the reference signal.

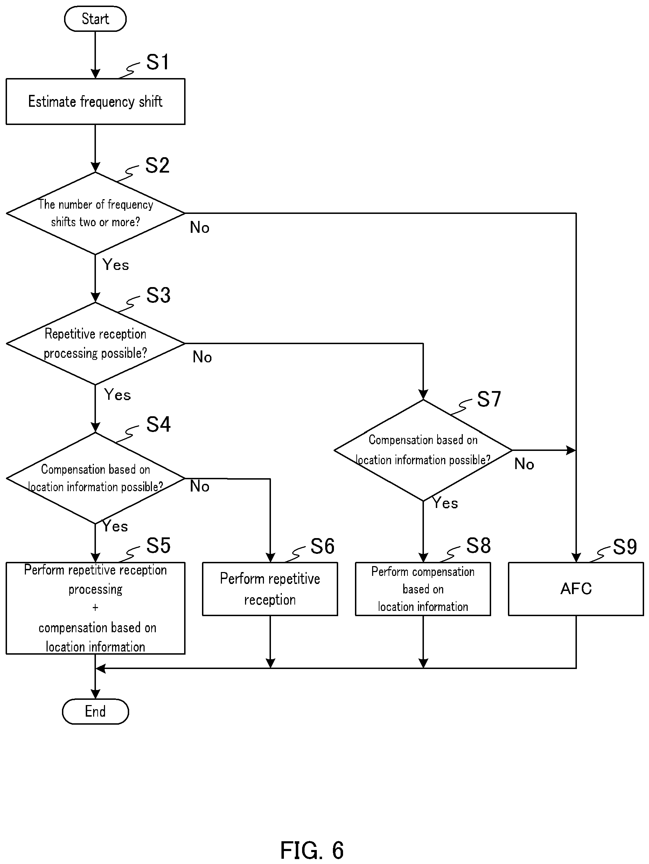

FIG. 6 is a flowchart describing an exemplary operation of terminal 4. Terminal 4, for example, repeatedly executes the processing of the flowchart illustrated in FIG. 6. In the following, the processing described in above 1 to 3 is referred to as "repetitive reception processing."

Terminal 4 estimates, based on a reference signal included in a carrier wave transmitted from base station 20, a frequency shift of a carrier wave (S1).

Terminal 4 determines whether the number of frequency shifts that have been estimated in S1 is two or more (S2).

When determining that the number of frequency shifts is not two or more (S2: No), i.e., when the number of frequency shifts is one as described in FIG. 2, terminal 4 compensates for a reception frequency of the carrier wave, based on the AFC, and then estimates a transmission signal from base station 20 (S9).

On the other hand, when determining that the number of frequency shifts is two or more (S2: Yes), i.e., when the number of frequency shifts is two or more as described in FIG. 3, terminal 4 determines whether the repetitive reception processing is possible (whether function of repetitive reception processing is included) (S3).

When determining that the repetitive reception processing is possible (S3: Yes), terminal 4 determines whether compensation processing for the reception frequency of the carrier wave using location information on terminal 4 and location information on base station 20 is possible (whether function of compensation processing for frequency shift using location information is included) (S4).

When determining that the compensation processing for the reception frequency of the carrier wave using the location information on terminal 4 and the location information on base station 20 is possible (S4: Yes), terminal 4 executes the compensation processing for the reception frequency of the carrier wave using the location information on terminal 4 and the location information on base station 20, and then executes the repetitive reception processing (S5). For example, terminal 4 uses the location information on terminal 4 and the location information on base station 20 to execute the compensation processing for the reception frequency of the carrier wave, and then executes, from a position of the reception frequency of the carrier wave for which the compensation processing has been performed, the AFC in the repetitive reception processing.

On the other hand, when determining that the compensation processing for the reception frequency of the carrier wave using the location information on terminal 4 and the location information on base station 20 is not possible (S4: No), terminal 4 executes the repetitive reception processing without executing the compensation processing for the reception frequency of the carrier wave using the location information on terminal 4 and the location information on base station 20 (S6).

When determining that the repetitive reception processing is not possible in S3 (S3: No), terminal 4 determines whether it is possible to execute the compensation processing for the reception frequency of the carrier wave using the location information on terminal 4 and the location information on base station 20 (S7).

When determining that the compensation processing for the reception frequency of the carrier wave using the location information on terminal 4 and the location information on base station 20 is possible (S7: Yes), terminal 4 executes the compensation processing for the reception frequency of the carrier wave using the location information on terminal 4 and the location information on base station 20 (S8). Thus, after performing the compensation processing for the reception frequency of the carrier wave, terminal 4 estimates a transmission signal from base station 20.

On the other hand, when determining that the compensation processing for the reception frequency of the carrier wave using the location information on terminal 4 and the location information on base station 20 is not possible (S7: No), terminal 4 executes AFC processing on the reception frequency of the carrier wave and then estimates a transmission signal from base station 20 (S9).

Incidentally, when terminal 4 has no function of compensation processing for a reception frequency of a carrier wave based on the location information, base station 20 may calculate phase rotation of a received carrier wave of terminal 4, based on the location information on base station 20 and the location information on terminal 4. Base station 20 may then apply the calculated phase rotation to a carrier wave and transmit the resultant wave to terminal 4.

Further, although the exemplary operation of terminal 4 has been described in FIG. 6, base station 20 may execute the same operation.

As described above, terminal 4 includes communication section 11 that receives a carrier wave from each of a plurality of base stations that transmits signals in cooperation and control section 12 that controls a reception frequency of each carrier wave based on a reference signal included in the carrier wave, and estimates the signals transmitted by the plurality of base stations, based on a decoding result of decoding processing in the carrier wave. This allows terminal 4 to appropriately receive signals transmitted by the plurality of base stations in cooperation.

For example, control section 12 controls the reception frequency of each carrier wave based on a reference signal included in the carrier wave, and thus estimates the signals transmitted by the plurality of base stations, based on a decoding result in the carrier wave. Therefore, even when frequency shifts occur in the respective carrier waves transmitted by the plurality of base stations, it is possible to appropriately receive signals transmitted by the plurality of base stations in cooperation.

Further, base station 20 includes communication section 21 that receives a carrier wave from each of a plurality of terminals that transmits signals and control section 22 that controls a reception frequency of each carrier wave based on a reference signal included in the carrier wave, and estimates the signals transmitted by the plurality of terminals, based on a decoding result of decoding processing in the carrier wave. This allows base station 20 to appropriately receive signals transmitted by the plurality of terminals in cooperation.

For example, control section 22 controls the reception frequency of each carrier wave based on a reference signal included in the carrier wave, and thus estimates the signals transmitted by the plurality of terminals, based on a decoding result in the carrier wave. Therefore, even when frequency shifts occur in the respective carrier waves transmitted by the plurality of terminals, it is possible to appropriately receive signals transmitted by the plurality of terminals in cooperation.

The present disclosure has been described, thus far.

### <Hardware Configuration and/or the like>

Note that, the block diagrams used to describe the embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or by radio), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit," "transmission section," or "transmitter." The methods for implementing the functions are not limited specifically as described above.

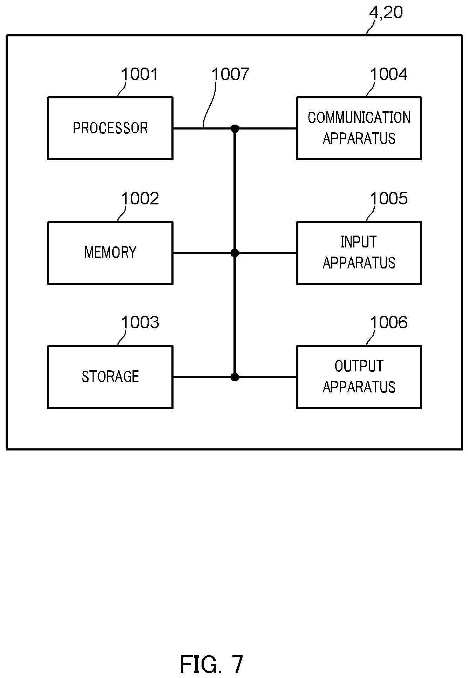

For example, terminal 4 and base station 20 according to an embodiment of the present disclosure may function as a computer that executes processing of a radio communication method of the present disclosure. FIG. 7 illustrates an example of a hardware configuration of terminal 4 and base station 20. Physically, each of terminal 4 and base station 20 as described above may be a computer apparatus including processor 1001, memory 1002, storage 1003, communication apparatus 1004, input section 1005, output section 1006, bus 1007, and the like.

Note that the term "apparatus" in the following description can be replaced with a circuit, a device, a unit, or the like. The hardware configurations of terminal 4 and base station 20 may include one apparatus or a plurality of apparatuses illustrated in the drawings or may not include part of the apparatuses.

The functions of terminal 4 and base station 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003. The functions of modules A, B, and C may be implemented using processor 1001.

Processor 1001 operates an operating system to entirely control the computer, for example. Processor 1001 may be composed of a central processing unit (CPU) including an interface with peripheral apparatuses, a control apparatus, an arithmetic apparatus, a register, and the like.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiment is used. For example, control sections 12 and 22 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers via at least one of wired and radio networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, communication sections 11 and 21 may be implemented using communication apparatus 1004. Each of communication sections 11 and 21 may include a transmission section that transmits a signal and a reception section that receives a signal.

An input apparatus (e.g., keyboard apparatus, mouse, microphone, switch, button, or sensor) that receives input from the outside and an operation apparatus (e.g., dial) is connected to input section 1005. An output apparatus (e.g., display, speaker, or LED lamp) is connected to output section 1006. Note that the input apparatus and the output apparatus that are connected to input section 1005 and output section 1006, respectively, may be integrated (e.g., touchscreen).

The apparatuses, such as processor 1001, memory 1002, and the like are connected by bus 1007 for communication of information. Bus 1007 may be configured using a single bus or using buses different between each pair of the apparatuses.

Furthermore, terminal 4 and base station 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### <Notification and Signaling of Information>

The notification of information is not limited to the aspect/embodiment described in the present disclosure, and the information may be notified by another method. For example, the notification of information may be carried out by one or a combination of physical layer signaling (for example, Downlink Control Information (DCI) and Uplink Control Information (UCI)), higher layer signaling (for example, Radio Resource Control (RRC) signaling, Medium Access Control (MAC) signaling, broadcast information (Master Information Block (MIB), and System Information Block (SIB))), and other signals or a combination thereof. The RRC signaling may be called an RRC message and may be, for example, an RRC connection setup message, an RRC connection reconfiguration message, or the like.

### <Applied System>

The aspect/embodiment described in the present specification may be applied to at least one of systems using Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flowcharts, and the like of the aspect/embodiment described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### <Direction of Input and Output>

The information or the like (*see the item of "Information and Signals") can be output from a higher layer (or lower layer) to a lower layer (or higher layer). The information and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like of Aspects>

The aspect/embodiment described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiment described in the present disclosure. Modifications and variations of the aspect of the present disclosure can be made without departing from the spirit and the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., coaxial cable, optical fiber cable, twisted pair, and digital subscriber line (DSL)) and a radio technique (e.g., infrared ray and microwave), the at least one of the wired technique and the radio technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or a random combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <"System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulae and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### <Base Station>

The terms "Base Station (BS)," "radio base station," "fixed station," "NodeB," "eNodeB (eNB)," "gNodeB (gNB)," "access point," "transmission point," "reception point," "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a means of transport (e.g., automobile, airplane, or the like), an unmanned mobile entity (e.g., drone, autonomous driving vehicle, or the like), or a robot (manned or unmanned). Note that, at least one of the base station and the mobile station also includes an apparatus that does not necessarily move during communication operation. For example, at least one of the base station and the mobile station may be Internet-of- Things (IoT) equipment such as a sensor.

The base station in the present disclosure may also be replaced with the user terminal. For example, the aspect/embodiment of the present disclosure may find application in a configuration that results from replacing communication between the base station and the user terminal with communication between multiple user terminals (such communication may, for example, be referred to as device-to-device (D2D), vehicle-to-everything (V2X), or the like). In this case, the user terminal may be configured to have the functions that the base station described above has. The wordings "uplink" and "downlink" may be replaced with a corresponding wording for inter-terminal communication (for example, "side"). For example, an uplink channel, a downlink channel, and the like may be replaced with a side channel.

Similarly, the user terminal in the present disclosure may be replaced with the base station. In this case, the base station is configured to have the functions that the user terminal described above has.

### <Meaning and Interpretation of Terms>

As used herein, the term "determining" may encompass a wide variety of actions. For example, "determining" may be regarded as judging, calculating, computing, processing, deriving, investigating, looking up (search or inquiry) (e.g., looking up in table, database or another data structure), ascertaining and the like. Furthermore, "determining" may be regarded as receiving (for example, receiving information), transmitting (for example, transmitting information), inputting, outputting, accessing (for example, accessing data in memory) and the like. Further, "determining" may be regarded as resolving, selecting, choosing, establishing, comparing and the like. That is, "determining" may be regarded as a certain type of action related to determining. Further, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus described above may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than that of the slot. PDSCH (or PUSCH) that is transmitted in the time unit that is greater than the mini-slot may be referred to as PDSCH (or PUSCH) mapping type A. PDSCH (or PUSCH) that is transmitted using the mini-slot may be referred to as PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (frequency bandwidth, transmit power, and the like that are used in each user terminal) on a TTI-by-TTI basis to each user terminal. Note that the definition of TTI is not limited to this.

The TTI may be a time unit for transmitting a channel-coded data packet (transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that makes up the minimum time unit for the scheduling may be controlled.

ATTI that has a time length of 1 ms may be referred to as a usual TTI (TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini-slot, a subslot, a slot, or the like.

Note that the long TTI (for example, usual TTI, subframe, or the like) may be replaced with the TTI that has a time length which exceeds 1 ms, and the short TTI (for example, shortened TTI or the like) may be replaced with a TTI that has a TTI length which is less than a TTI length of the long TTI and is equal to or longer than 1 ms.

A resource block (RB) is a resource-allocation unit in the time domain and the frequency domain, and may include one or more contiguous subcarriers in the frequency domain. The number of subcarriers that is included in the RB may be identical regardless of the numerology, and may be 12, for example. The number of subcarriers that is included in the RB may be determined based on the numerology.

In addition, the RB may include one symbol or a plurality of symbols in the time domain, and may have a length of one slot, one mini slot, one subframe, or one TTI. One TTI, one subframe, and the like may be each constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as partial bandwidth or the like) may represent a subset of contiguous common resource blocks (RB) for certain numerology in a certain carrier. Here, the common RBs may be identified by RB indices with reference to a common reference point of the carrier. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that is included in the radio frame, the number of slots per subframe or radio frame, the number of mini-slots that is included within the slot, the numbers of symbols and RBs that are included in the slot or the mini-slot, the number of subcarriers that is included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

The present patent application claims the benefit of priority based on Japanese Patent Application No. 2021-047413 filed on March 22, 2021, and the entire content of Japanese Patent Application No. 2021-047413 is hereby incorporated by reference.

### Industrial Applicability

The present disclosure is useful for radio systems.

### Reference Signs List

1 Fixed base station
1a CU
1b DU
1ca, 1cb Radio station
2 Mobile base station
3, 4 Terminal
11, 21 Communication section
12, 22 Control section
20 Base station

## Claims

1. A terminal, comprising:
a reception section that receives a carrier wave from each of a plurality of base stations that transmits a signal in cooperation; and
a control section that controls a reception frequency of the carrier wave based on a reference signal included in the carrier wave, and estimates the signal based on a decoding result of decoding processing in the carrier wave.

2. The terminal according to claim 1, wherein the control section controls the reception frequency of the carrier wave based on the reference signal, after controlling the reception frequency of the carrier wave based on an amount of a frequency shift of the carrier wave that is acquired by location information on a corresponding one of the plurality of base stations and location information on the terminal.

3. A communication method, comprising:
receiving, by a terminal, a carrier wave from each of a plurality of base stations that transmits a signal in cooperation;
controlling, by the terminal, a reception frequency of the carrier wave based on a reference signal included in the carrier wave; and
estimating, by the terminal, the signal based on a decoding result of decoding processing in the carrier wave.

4. A base station, comprising:
a reception section that receives a carrier wave from each of a plurality of terminals; and
a control section that controls a reception frequency of the carrier wave based on a reference signal included in the carrier wave, and estimates a signal transmitted by the plurality of terminals, based on a decoding result of decoding processing in the carrier wave.

5. The base station according to claim 4, wherein the control section controls the reception frequency of the carrier wave based on the reference signal, after controlling the reception frequency of the carrier wave based on an amount of a frequency shift of the carrier wave that is acquired by location information on a corresponding one of the plurality of terminals and location information on the base station.

6. A communication method, comprising:
receiving, by a base station, a carrier wave from each of a plurality of terminals;
controlling, by the base station, a reception frequency of the carrier wave based on a reference signal included in the carrier wave; and
estimating, by the base station, a signal transmitted by the plurality of terminals, based on a decoding result of decoding processing in the carrier wave.
